# FASCICULE DE BREVET EUROPEEN

(11) **EP 2 720 855 B1**
(45) Date de publication et mention de la délivrance du brevet: **17.08.2016**
(21) Numéro de dépôt: 12730832.8
(22) Date de dépôt: 12.06.2012
(51) Int. Cl.: B32B 3/12, B32B 5/26, B32B 37/26, B29C 70/44

(54) **ROCEDE DE REALISATION D'UN COMPOSITE DU TYPE SANDWICH PAR CO-CUISSON**
VERFAHREN ZUR HERSTELLUNG EINES SANDWICHVERBUNDES DURCH CO-HÄRTUNG
METHOD FOR PRODUCING A SANDWICH COMPOSITE BY CO-CURING

(30) Priorité: 14.06.2011 FR 1155168
(43) Date de publication de la demande: 23.04.2014
(73) Titulaire: Airbus Defence and Space SAS, 78130 Les Mureaux (FR)
(72) Inventeur: DESAGULIER, Christian, F-75016 Paris (FR); VEILLERAUD, Frédéric, F-78510 Triel sur Seine (FR); LAVELLE, Florian, F-75012 Paris (FR)
(74) Mandataire: Ahner, Philippe
(86) Numéro de dépôt international: PCT/EP2012/061124
(87) Numéro de publication internationale: WO 2012/171921

(56) Documents cités:
- WO-A1-2011/096935
- DE-B3-102009 010 621
- FR-A1- 2 928 861

## Description

### DOMAINE TECHNIQUE

L'invention propose un procédé pour réaliser un composite du type sandwich par cocuisson permettant de limiter la porosité des matériaux.

L'invention permet notamment de limiter les phénomènes dits de télégraphing et de foisonnement.

### ÉTAT DE LA TECHNIQUE ANTÉRIEURE

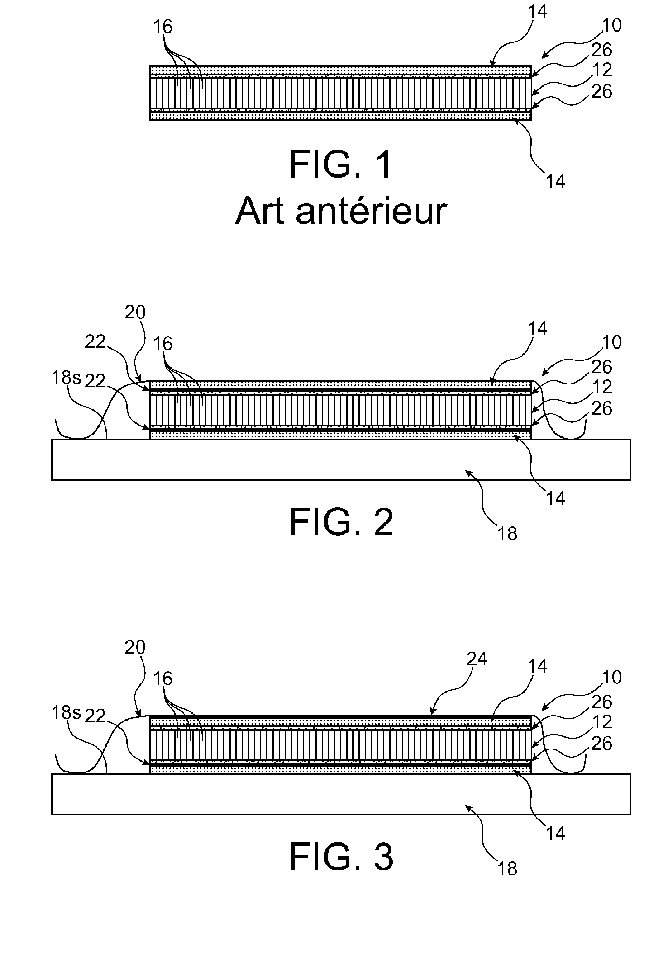

On a représenté à la figure 1 un composite 10 conventionnel du type sandwich qui consiste en un assemblage de peaux 14 en matériau composite, constituées par exemple de fibres et d'un liant tel qu'une résine, de part et d'autre d'une âme centrale 12, ayant par exemple une structure du type en nid d'abeille par un film de colle 26.

La réalisation du composite 10 par cocuisson permet de réaliser en une seule étape de cuisson le durcissement des peaux 14 et leur assemblage sur l'âme 12 par un film de colle 26 entre chaque peau et l'âme, qui est durci lui aussi pendant l'étape de cuisson.

Un tel procédé permet un gain de temps par rapport à un procédé d'assemblage pour lequel les peaux 14 sont cuites pendant une première étape de cuisson et elles sont liées à l'âme 12 pendant une deuxième étape de cuisson d'un film de colle 26 entre l'âme 12 et chaque peau 14.

Lors de l'étape unique de cuisson, la résine liant les fibres entre elles et le film de colle 26 liant les peaux à l'âme durcissent simultanément.

Cette étape de cuisson est mise en oeuvre par l'intermédiaire d'un dispositif qui comporte un moule inférieur sur lequel les peaux 14 et l'âme 12 sont placées pour être mises à la forme du composite 10 à obtenir et qui comporte une membrane souple, ou vessie, qui recouvre les peaux 14 et l'âme 12 pour appliquer un vide d'air entre la vessie et le moule.

Le vide d'air provoque alors une pression de la vessie et du moule sur les peaux 14, les serrant sur l'âme 12 centrale.

Sous cette pression, la peau 14 en contact avec la vessie, est déformée vers l'intérieur des alvéoles 16 de l'âme 12, et les composés de l'autre peau 14, qui sont en contact avec le moule, remontent vers l'intérieur des alvéoles 16 de l'âme 12.

Ces phénomènes, que l'on appelle communément "télégraphing" pour le premier, et "foisonnement" pour le deuxième, limitent les propriétés mécaniques du composite 10 car les fibres des peaux 14 ne sont pas toutes orientées correctement, notamment au niveau des extrémités des alvéoles 16.

Pour limiter le phénomène de télégraphing, il a été proposé d'introduire une plaque formant répartiteur de pression entre la vessie et la peau adjacente.

Cependant, cette solution ne permet pas de supprimer complètement le phénomène de télégraphing et ne permet pas de limiter le phénomène de foisonnement.

Des procédés selon l'état de la technique antérieure sont connus des documents DE 10 2009 010 621 B3 et WO 2011/096935 A1.

L'invention a pour but de proposer un procédé pour réaliser un composite 10 du type sandwich par cocuisson, permettant de limiter à la fois le phénomène de télégraphing et le phénomène de foisonnement.

### EXPOSÉ DE L'INVENTION

L'invention propose un procédé de réalisation d'un composite comportant deux peaux en matériau composite collées de part et d'autre d'une âme se présentant sous la forme d'un panneau du type en nid d'abeille comportant des alvéoles perpendiculaires au plan principal du panneau, le procédé comportant une étape consistant à superposer les peaux et l'âme sur un moule et une étape de cuisson des peaux sur l'âme pour réaliser simultanément le durcissement des peaux et le collage des peaux avec l'âme, caractérisé en ce qu'il consiste à placer une couche de rigidification entre l'âme et au moins une peau lors de l'étape de superposition des peaux et de l'âme, ladite couche de rigidification étant réalisée de manière à répartir les effort de pression entre ladite au moins une peau associée et l'âme.

L'introduction d'une couche de rigidification entre l'âme et une peau permet de limiter l'un et/ou l'autre des deux phénomènes de télégraphing et de foisonnement.

De préférence, une couche de rigidification est interposée entre l'âme et chaque peau lors de l'étape de mise en place des peaux.

De préférence, une couche de rigidification est interposée uniquement entre l'âme et la peau qui est posée directement sur le moule.

De préférence, une vessie recouvre l'empilement comportant l'âme, les peaux et la couche de rigidification et un répartiteur de pression est agencé entre la vessie et la peau située la plus près de la vessie.

De préférence, la couche de rigidification consiste en une couche de matériau composite précuite.

De préférence, le composite a une forme non plane et la forme de la couche de rigidification est similaire à la forme finale du composite.

De préférence, la couche de rigidification consiste en une couche de matériau composite qui est cuite lors de ladite étape de cuisson.

De préférence, la couche de rigidification comporte des fibres formant un maillage dont la taille des mailles est inférieure à la taille des alvéoles de l'âme

De préférence, la couche de rigidification est formée à partir de bandes parallèles de fibres disposées en recouvrement les unes sur les autres.

De préférence, la couche de rigidification est formée à partir de bandes croisées de fibres.

### BRÈVE DESCRIPTION DES DESSINS

D'autres caractéristiques et avantages de l'invention apparaîtront à la lecture de la description détaillée qui suit pour la compréhension de laquelle on se reportera aux figures annexées parmi lesquelles :
- la figure 1 est une représentation schématique en section d'un composite du type sandwich obtenu selon l'état de la technique antérieure ;
- la figure 2 est une section des parties d'un composite selon l'invention, mises en place sur un dispositif de moulage avant l'étape de cuisson, dans laquelle deux couches de rigidification sont incorporées à l'empilement ;
- la figure 3 est une section similaire à celle de la figure 2, dans laquelle une seule couche de rigidification est incorporée à l'empilement.

### EXPOSÉ DÉTAILLÉ DE MODES DE RÉALISATION PARTICULIERS

On a représenté à la figure 2 les éléments destinés à former un composite 10 du type sandwich, qui comporte une âme centrale 12 qui est ici plane et horizontale, et deux peaux planes 14 réparties verticalement de part et d'autre de l'âme 12 et collées à l'âme 12 au moyen d'une couche de colle 26.

L'âme 12 forme une structure du type en nid d'abeille, c'est-à-dire qu'elle comporte une pluralité d'alvéoles verticales 16 accolées les unes aux autres. L'âme 12 est réalisée en matériau connu, par exemple un matériau composite, ou bien un matériau métallique.

Les peaux 14 consistent chacune en une couche d'un matériau composite.

Le matériau composite constituant les peaux 14 est constitué d'un renfort se présentant sous forme de fibres continues ou discontinues permettant d'assurer la fonction de résistance mécanique aux efforts et d'une matrice, qui agit en tant que liant et qui assure la cohésion entre les renforts de manière à répartir les sollicitations mécaniques.

A titre d'exemples le matériau composite est à base de fibres de carbone, de fibres de poly-para-phénylène téréphtalamide connues sous la désignation "KEVLAR", de fibres de verre ou bien d'un mélange de fibres de verre et d'aluminium connu sous la désignation "GLARE" (GLAss REinforced).

Selon un premier mode de réalisation, les fibres sont organisées sous la forme de nappes de fibres parallèles. Ces nappes sont disposées en se croisant ou en se recouvrant les unes sur les autres, de manière à former plusieurs couches constitutives de la peau 14.

Selon un autre mode de réalisation, les fibres sont organisées de manière à former un tissu, et plusieurs couches de tissu sont superposées pour former la peau 14.

La matrice consiste par exemple en une résine thermodurcissable.

La réalisation du composite 10 s'effectue selon un procédé dit de "cocuisson", c'est-à-dire que la cuisson de la résine formant la matrice des peaux 14 et la cuisson d'un film de colle 26 utilisé pour la fixation des peaux 14 avec l'âme 12, s'effectuent en une seule et même étape de cuisson.

Le dispositif utilisé pour mettre en oeuvre le procédé de réalisation du composite 10, comporte un moule 18 sur lequel les peaux 14, l'âme 12 et les films de colle 26 sont empilés, et une vessie 20 qui recouvre les peaux 14 et l'âme 12 et qui est fixée au moule 18 de manière étanche aux gaz, de manière telle qu'un vide d'air puisse être formé dans le volume délimité par le moule 18 et la vessie 20, dans lequel les peaux 14, l'âme 12 et les films de colle 26 sont reçus.

Le moule 18 comporte une face supérieure 18s, qui est ici plane et horizontale.

Il sera compris que l'invention n'est pas limitée à cette forme de la face supérieure, qui peut être de tout type, selon la forme voulue du composite 10. La face supérieure 18s du moule 18 peut ainsi être courbée, être concave ou convexe.

Selon une première étape du procédé de réalisation du composite 10, les peaux 14, l'âme 12 et les films de colle 26 sont empilés successivement sur la face supérieure 18s du moule 18.

Ensuite, la vessie 20 est fixée au moule 18, en recouvrant le sandwich formé par les peaux 14 Et l'âme 12.

Un vide d'air est formé entre la vessie 20 et le moule 18, pour presser les peaux 14 et l'âme 12 contre la face supérieure 18s du moule 18 et ainsi leur imprimer la forme du moule qui est la forme voulue du composite 10 à obtenir.

Ensuite, l'ensemble est positionné dans un four (non représenté) pour réaliser l'étape unique de cuisson des peaux 14, de l'âme 12 et des films de colle 26, appelée étape de cocuisson, de manière à obtenir le composite 10 à l'issue de cette seule étape de cuisson.

La dépression, ou le vide d'air, formée entre le moule 18 et la vessie 20 permet de maintenir les peaux 14 en appui verticalement contre l'âme 12.

Pour réduire les risques de télégraphing et de foisonnement, c'est-à-dire que des fibres et/ou de la colle ne pénètrent à l'intérieur des alvéoles 16 de l'âme 12, le procédé selon l'invention consiste à introduire une couche de rigidification 22 entre chaque peau 14 et l'âme 12 lors de l'étape de mise en place des peaux et de l'âme 12 sur le moule.

Cette couche de rigidification 22 est donc incorporée au composite 10 et fait partie de sa structure. La couche de rigidification apporte donc des propriétés notamment mécaniques et/ou thermiques au composite 10. Elle est par conséquent conçue en fonction des propriétés mécaniques ou thermiques voulues du composite 10.

La couche de rigidification 22 est conçue de manière à obturer en partie les alvéoles 16 de l'âme 12, tout en étant traversée par de la résine permettant la fixation de chaque peau 14 sur l'âme 12.

En outre, la couche de rigidification 22 répartit la pression verticale entre la peau associée 14 et l'âme 12 sur toute la surface de la couche de rigidification 22, cette pression n'est donc pas concentrée au niveau des extrémités des parois des alvéoles 16. La pression en chaque point de contact entre une peau 14 et la couche de rigidification 22 associée est donc limitée, ce qui limite les phénomènes de foisonnement ou de télégraphing.

Selon un mode de réalisation de l'invention, la couche de rigidification 22 est réalisée en matériau composite, similaire aux peaux 14 et comporte un renfort et une matrice.

La couche de rigidification 22 est réalisée de manière conventionnelle, elle peut donc consister en un tissu d'une seule pièce, ou bien être réalisée à partir d'une pluralité de bandes, disposées en parallèle et en recouvrement, ou bien croisées.

La couche de rigidification 22 est par contre cuite au préalable, lors d'une étape de cuisson séparée des étapes mentionnées précédemment. Ainsi, la couche de rigidification 22 a déjà été durcie, de sorte qu'elle ne se déforme pas sous l'effet de la pression de la peau 14 associée sur l'âme 12.

Cette étape de cuisson de la couche de rigidification 22 ne prolonge par conséquent pas la durée du procédé, il n'y a donc pas de perte de temps provoquée par la production de la couche de rigidification 22.

Lorsque le composite 10 est de forme non plane, la couche de rigidification 22 est mise en forme lors de sa cuisson, dans une forme complémentaire de la forme définitive du composite 10 et de la forme de la face supérieure 18s du moule 18.

La couche de rigidification 22 peut aussi être réalisée en métal, par exemple elle consiste en un maillage métallique.

Selon un autre aspect, lorsque la couche de rigidification 22 consiste en un maillage par exemple métallique, la taille du maillage est déterminée en fonction de la dimension des alvéoles 16 de l'âme 12.

De préférence, la taille des mailles de la couche de rigidification 22 est inférieure à la taille des alvéoles 16, de manière à obturer au moins en partie l'extrémité de chaque alvéole 16, empêchant ainsi que la peau 14 associée ne se déforme vers l'intérieur de chaque alvéole 16.

Selon une variante de réalisation, la couche de rigidification 22 est mise en forme et cuite lors de l'opération de cocuisson.

Selon cette variante de réalisation, la résine constituant la couche de rigidification 22 assure aussi la liaison de la couche de rigidification 22 à l'âme 12 et à la peau 14 associée. Cela permet de réduire, voire de supprimer la couche de colle 26.

Selon le mode de réalisation représenté à la figure 2, le composite 10 comporte deux couches de rigidification 22 qui sont réparties de part et d'autre de l'âme 12.

Selon un autre mode de réalisation selon l'invention, le composite 10 comporte une seule couche de rigidification 22 qui est agencée d'un seul côté de l'âme 12.

Comme on l'a représenté à la figure 3, la couche de rigidification 22 est agencée entre l'âme 12 et la peau inférieure 14, c'est-à-dire la peau qui est posée directement sur la face supérieure 18s du moule 18. Cette couche de rigidification 22 permet de limiter la remontée de matière dans les alvéoles, c'est-à-dire le phénomène de foisonnement.

Pour limiter le phénomène de télégraphing, un répartiteur de pression 24 est interposé entre la vessie 20 et la peau supérieure 14, qui est la plus près de la vessie 20.

Ce répartiteur de pression 24 n'est pas une partie du composite 10 final, ce qui limite le poids et la structure du composite 10 et n'influe pas sur le comportement mécanique du composite 10.

Selon une variante de réalisation, la couche de rigidification 22 est agencée entre l'âme 12 et la peau supérieure 14, c'est-à-dire la peau qui est en contact avec la vessie 20.

## Revendications

1. Procédé de réalisation d'un composite (10) comportant deux peaux (14) en matériau composite collées de part et d'autre d'une âme (12) se présentant sous la forme d'un panneau du type en nid d'abeille comportant des alvéoles (16) perpendiculaires au plan principal du panneau,
le procédé comportant une étape consistant à superposer les peaux (14) et l'âme (12) sur un moule (18) et une étape de cuisson des peaux (14) sur l'âme (12) pour réaliser simultanément le durcissement des peaux (14) et le collage des peaux (14) avec l'âme (12),
**caractérisé en ce qu'**il consiste à placer une couche de rigidification (22) entre l'âme (12) et au moins une peau (14) lors de l'étape de superposition des peaux (14) et de l'âme (12), ladite couche de rigidification (22) étant réalisée de manière à répartir les efforts de pression entre ladite au moins une peau (14) associée et l'âme (12).

2. Procédé selon la revendication précédente, **caractérisé en ce qu'**une couche de rigidification (22) est interposée entre l'âme (12) et chaque peau (14) lors de l'étape de mise en place des peaux (14).

3. Procédé selon la revendication 1 **caractérisé en ce qu'**une couche de rigidification (22) est interposée uniquement entre l'âme (12) et la peau (14) qui est posée directement sur le moule (18).

4. Procédé selon la revendication précédente, dans lequel une vessie (20) recouvre l'empilement comportant l'âme (12), les peaux (14) et la couche de rigidification (22), **caractérisé en ce que** un répartiteur (24) de pression est agencé entre la vessie (20) et la peau (14) située la plus près de la vessie (20).

5. Procédé selon l'une quelconque des revendications précédentes, **caractérisé en ce que** la couche de rigidification (22) consiste en une couche de matériau composite précuite.

6. Procédé selon la revendication précédente, dans lequel le composite (10) a une forme non plane, **caractérisé en ce que** la forme de la couche de rigidification (22) est similaire à la forme finale du composite (10).

7. Procédé selon l'une quelconque des revendications 1 à 4, **caractérisé en ce que** la couche de rigidification (22) consiste en une couche de matériau composite qui est cuite lors de ladite étape de cuisson.

8. Procédé selon l'une quelconque des revendications 5 à 7, **caractérisé en ce que** la couche de rigidification (22) comporte des fibres formant un maillage dont la taille des mailles est inférieure à la taille des alvéoles (16) de l'âme (12)

9. Procédé selon l'une quelconque des revendications précédentes, **caractérisé en ce que** la couche de rigidification (22) est formée à partir de bandes parallèles de fibres disposées en recouvrement les unes sur les autres.

10. Procédé selon l'une quelconque des revendications 1 à 8, **caractérisé en ce que** la couche de rigidification (22) est formée à partir de bandes croisées de fibres.

## Patentansprüche

1. Verfahren zur Herstellung eines Verbundes (10), umfassend zwei Außenlagen (14) aus Verbundwerkstoff, die beidseitig auf einen Kern (12) geklebt sind, der die Form einer Platte mit Wabenstruktur aufweist, die Zellen (16) senkrecht zur Hauptebene der Platte umfasst,
wobei das Verfahren einen Schritt zum Übereinanderlegen der Außenlagen (14) und des Kerns (12) auf einer Form (18) und einen Schritt zum Härten der Außenlagen (14) auf dem Kern (12) umfasst, um gleichzeitig das Härten der Außenlagen (14) und das Verkleben der Außenlagen (14) mit dem Kern (12) auszuführen,
**dadurch gekennzeichnet, dass** es darin besteht, während des Schritts zum Übereinanderlegen der Außenlagen (14) und des Kerns (12) eine Versteifungsschicht (22) zwischen dem Kern (12) und mindestens einer Außenlage (14) anzuordnen, wobei die Versteifungsschicht (22) derart hergestellt wird, dass sie die Druckkräfte auf der mindestens einen Außenlage (14), die mit dem Kern (12) verbunden ist, verteilt.

2. Verfahren nach dem vorhergehenden Anspruch, **dadurch gekennzeichnet, dass** während des Schritts zur Anbringung der Außenlagen (14) eine Versteifungsschicht (22) zwischen den Kern (12) und jede Außenlage (14) eingefügt wird.

3. Verfahren nach Anspruch 1, **dadurch gekennzeichnet, dass** eine Versteifungsschicht (22) nur zwischen den Kern (12) und die Außenlage (14) eingefügt wird, die direkt auf die Form (18) gelegt wird.

4. Verfahren nach dem vorhergehenden Anspruch, wobei eine Blase (20) den Stapel, der den Kern (12), die Außenlagen (14) und die Versteifungsschicht (22) umfasst, bedeckt, **dadurch gekennzeichnet, dass** ein Druckverteiler (24) zwischen der Blase (20) und der Außenlage (14), die der Blase (20) am nächsten liegt, angebracht ist.

5. Verfahren nach einem der vorhergehenden Ansprüche, **dadurch gekennzeichnet, dass** die Versteifungsschicht (22) aus einer Schicht aus vorgehärtetem Verbundwerkstoff besteht.

6. Verfahren nach dem vorhergehenden Anspruch, wobei der Verbund (10) eine nicht ebene Form aufweist, **dadurch gekennzeichnet, dass** die Form der Versteifungsschicht (22) der endgültigen Form des Verbundes (10) ähnelt.

7. Verfahren nach einem der Ansprüche 1 bis 4, **dadurch gekennzeichnet, dass** die Versteifungsschicht (22) aus einer Schicht aus Verbundwerkstoff besteht, die während des Schritts zum Härten gehärtet wird.

8. Verfahren nach einem der Ansprüche 5 bis 7, **dadurch gekennzeichnet, dass** die Versteifungsschicht (22) Fasern umfasst, die ein Netz bilden, dessen Maschenweite kleiner ist als die Größe der Zellen (16) des Kerns (12).

9. Verfahren nach einem der vorhergehenden Ansprüche, **dadurch gekennzeichnet, dass** die Versteifungsschicht (22) aus parallelen Faserbahnen gebildet ist, die so angeordnet sind, dass sie einander überlappen.

10. Verfahren nach einem der Ansprüche 1 bis 8, **dadurch gekennzeichnet, dass** die Versteifungsschicht (22) aus gekreuzten Faserbahnen gebildet ist.

## Claims

1. A method for making a composite (10) including two skins (14) of composite material bonded on either side of a core (12) having the form of a honeycomb type panel including cells (16) perpendicular to the main plane of the panel,
the method including a step of superimposing the skins (14) and the core (12) onto a mould (18) and a step of firing the skins (14) on the core (12) to simultaneously carry out hardening of the skins (14) and bonding of the skins (14) with the core (12),
**characterised in that** it consists in placing a rigidifying layer (22) between the core (12) and at least one skin (14) during the step of superimposing the skins (14) and the core (12), said rigidifying layer (12) being made so as to distribute pressure strains between said at least one associated skin (14) and the core (12).

2. The method according to the preceding claim, **characterised in that** a rigidifying layer (22) is interposed between the core (12) and each skin (14) during the step of placing the skins (14).

3. The method according to claim 1, **characterised in that** a rigidifying layer (22) is only interposed between the core (12) and the skin (14) which directly lies on the mould (18).

4. The method according to the preceding claim, wherein a bladder (20) covers the stack including the core (12), the skins (14) and the rigidifying layer (22), **characterised in that** a pressure distributor (24) is arranged between the bladder (20) and the skin (14) located closest to the bladder (20).

5. The method according to any of the preceding claims, **characterised in that** the rigidifying layer (22) consists of a pre-fired layer of composite material.

6. The method according to the preceding claim, wherein the composite (10) has a non-planar shape, **characterised in that** the shape of the rigidifying layer (22) is similar to the final shape of the composite (10).

7. The method according to any of the preceding claims, **characterised in that** the rigidifying layer (22) consists of a layer of composite material which is fired during said firing step.

8. The method according to any of claims 5 to 7, **characterised in that** the rigidifying layer (22) includes fibres forming a meshing the mesh size of which is lower than the size of the cells (16) of the core (12).

9. The method according to any of the preceding claims, **characterised in that** the rigidifying layer (22) is formed from parallel strips of fibres arranged by covering each other.

10. The method according to any of claims 1 to 8, **characterised in that** the rigidifying layer (22) is formed from intersected strips of fibres.
